# EUROPEAN PATENT APPLICATION

(11) **EP 4 810 375 A1**
(43) Date of publication of application: **23.09.2026**
(21) Application number: 26165909.8
(22) Date of filing: 18.03.2026
(51) Int. Cl.: B64D 27/33, B64D 35/022, F16H 1/10, F16H 1/22

(54) **HYBRID-ELECTRIC DRIVETRAIN FOR AN AIRCRAFT PROPULSION SYSTEM**

(30) Priority: 18.03.2025 US 202519083063
(71) Applicant: Pratt & Whitney Canada Corp., Longueuil, Québec J4G 1A1 (CA)
(72) Inventor: DUROCHER, Eric S., (01BE5) Longueuil, J4G 1A1 (CA); WEAVER, Paul, (01BE5) Longueuil, J4G 1A1 (CA); BRITO, Roberto, (01BE5) Longueuil, J4G 1A1 (CA); CHATELOIS, Bruno, (01BE5) Longueuil, J4G 1A1 (CA)
(74) Representative: Dehns

(57) **Abstract**

A propulsion system (20) includes an engine (22), a drivetrain (26), and a propulsor (24). The engine (22) includes an engine output shaft (52). The drivetrain (26) is coupled with the engine output shaft (52). The drivetrain (26) includes a propulsor output shaft (60), a gear assembly (64), and an electric motor assembly (62). The gear assembly (64) includes a propulsor output gear (70) mounted on the propulsor output shaft (60). The propulsor output gear (70) includes a ring (84). The ring (84) includes an outer gear face (86) and an inner gear face (88). The electric motor assembly (62) includes at least one electric motor (94). The at least one electric motor (94) includes a rotor (96). The rotor (96) includes an electric motor output shaft (98) and an electric motor output gear (100) mounted on the electric motor output shaft (98). The electric motor output gear (100) is engaged with the inner gear face (88). The propulsor (24) is interconnected with the propulsor output gear (70) by the propulsor output shaft (60).

## Description

### TECHNICAL FIELD

This invention relates generally to hybrid-electric propulsion systems for aircraft and, more particularly, to a propulsion system drivetrain including one or more electric motors.

### BACKGROUND OF THE ART

Hybrid-electric propulsion systems for aircraft may typically include one or more electric motors configured to supplement or replace a propulsion system engine (e.g., a gas turbine engine, an intermittent combustion engine, etc.) output to one or more propulsors. Various hybrid-electric propulsion system configurations are known. While these known propulsion system configurations may be suitable for their intended purposes, there is always room in the art for improvement.

### SUMMARY

According to one aspect of the present invention, there is provided a propulsion system for an aircraft including an engine, a drivetrain, and a propulsor. The engine includes an engine output shaft. The drivetrain is coupled with the engine output shaft. The drivetrain includes a propulsor output shaft, a gear assembly, and an electric motor assembly. The gear assembly includes a propulsor output gear mounted on the propulsor output shaft. The propulsor output gear and the propulsor output shaft are rotatable about a rotational axis. The propulsor output gear includes a ring extending circumferentially about the rotational axis. The ring extends between an outer radial side and an inner radial side. The ring includes an outer gear face and an inner gear face. The outer gear face is disposed on the outer radial side. The inner gear face is disposed on the inner radial side. The electric motor assembly includes at least one electric motor. The at least one electric motor includes a rotor. The rotor includes an electric motor output shaft and an electric motor output gear mounted on the electric motor output shaft. The electric motor output gear is engaged with the inner gear face. The propulsor is interconnected with the propulsor output gear by the propulsor output shaft. The propulsor is rotatable about the rotational axis.

Optionally, and in accordance with the above, the drivetrain may further include at least one reduction gear-shaft assembly, the at least one reduction gear-shaft assembly may be engaged with the outer gear face, and the at least one reduction gear-shaft assembly may be coupled with the engine output shaft.

Optionally, and in accordance with any of the above, the propulsor output gear may include a base wall extending radially between the propulsor output shaft and the ring, the base wall may be connected to the ring at the inner gear face.

Optionally, and in accordance with any of the above, the electric motor output gear may be engaged with a first axial portion of the inner gear face between the propulsor and the base wall.

Optionally, and in accordance with any of the above, the at least one electric motor may include a plurality of electric motors, and the electric motor output gear of each of the plurality of electric motors may be engaged with the first axial portion.

Optionally, and in accordance with any of the above, the electric motor output gear may be engaged with a second axial portion of the inner gear face opposite the base wall from the propulsor.

Optionally, and in accordance with any of the above, the at least one electric motor may include a plurality of electric motors, and the electric motor output gear of each of the plurality of electric motors may be engaged with the second axial portion.

Optionally, and in accordance with any of the above, the inner gear face may include a first axial portion and a second axial portion, the first axial portion may be disposed on a first axial side of the base wall, the second axial portion may be disposed on a second axial side of the base wall opposite the first axial side, the at least one electric motor may include a first electric motor and a second electric motor, the electric motor output gear of the first electric motor may be engaged with the first axial portion, and the electric motor output gear of the second electric motor may be engaged with the second axial portion.

Optionally, and in accordance with any of the above, the at least one electric motor may include a plurality of electric motors, and the electric motor output gear of each of the plurality of electric motors may be engaged with the inner gear face.

Optionally, and in accordance with any of the above, each of the plurality of electric motors may be disposed within a radial span of the propulsor output gear.

Optionally, and in accordance with any of the above, each of the plurality of electric motors may be disposed within an axial span of the propulsor output shaft.

Optionally, and in accordance with any of the above, the plurality of electric motors may be circumferentially distributed about the rotational axis.

According to another aspect of the present invention, there is provided a propulsion system for an aircraft including an engine, a drivetrain, and a propulsor. The engine includes an engine output shaft. The drivetrain is coupled with the engine output shaft. The drivetrain includes a propulsor output shaft, a gear assembly, and an electric motor assembly. The gear assembly includes a propulsor output gear, a first reduction gear-shaft assembly, and a second reduction gear-shaft assembly. The propulsor output gear is mounted on the propulsor output shaft. The propulsor output gear includes a ring circumscribing the propulsor output gear. The ring includes an outer gear face and an inner gear face. The first reduction gear-shaft assembly and the second reduction gear-shaft assembly are engaged with the outer gear face. The first reduction gear-shaft assembly and the second reduction gear-shaft assembly are coupled with the engine output shaft. The electric motor assembly includes at least one electric motor. The at least one electric motor includes a rotor. The rotor includes an electric motor output shaft and an electric motor output gear mounted on the electric motor output shaft. The electric motor output gear is engaged with the inner gear face. The propulsor is interconnected with the propulsor output gear by the propulsor output shaft.

Optionally, and in accordance with any of the above, the engine output shaft may have a first rotational axis, the propulsor output shaft may have a second rotational axis, and the first rotational axis may be offset from the second rotational axis.

Optionally, and in accordance with any of the above, the at least one electric motor may include a plurality of electric motors, and the electric motor output gear of each of the plurality of electric motors may be engaged with the inner gear face.

Optionally, and in accordance with any of the above, each of the plurality of electric motors may be disposed within a radial span of the propulsor output gear.

Optionally, and in accordance with any of the above, each of the plurality of electric motors may be disposed within an axial span of the propulsor output shaft.

Optionally, and in accordance with any of the above, the plurality of electric motors may be circumferentially distributed about the rotational axis.

Optionally, and in accordance with any of the above, the propulsor output gear may be rotatable about a rotational axis, the plurality of electric motors may include a forward-mounted electric motor and an aft-mounted electric motor, the forward-mounted electric motor may be disposed axially between the propulsor output gear and the propulsor, and the aft-mounted electric motor may be disposed opposite the propulsor output gear from the propulsor.

Optionally, and in accordance with any of the above, each of the first reduction gear-shaft assembly and the second reduction gear-shaft assembly may include a reduction shaft, a first reduction gear, and a second reduction gear, the first reduction gear and the second reduction gear may be mounted on the reduction shaft, the first reduction gear may be coupled with the engine output shaft, and the second reduction gear may be engaged with the outer gear face.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 illustrates a perspective view of a portion of a drivetrain of the aircraft propulsion system, in accordance with one or more embodiments of the present disclosure.
FIG. 4 illustrates a perspective view of a portion of a drivetrain of the aircraft propulsion system including a forward-mounted electric motor, in accordance with one or more embodiments of the present disclosure.
FIG. 5 illustrates a perspective view of a portion of a drivetrain of the aircraft propulsion system including a plurality of forward-mounted electric motors, in accordance with one or more embodiments of the present disclosure.
FIG. 6 illustrates a perspective view of a portion of a drivetrain of the aircraft propulsion system including an aft-mounted electric motor, in accordance with one or more embodiments of the present disclosure.
FIG. 7 illustrates a perspective view of a portion of a drivetrain of the aircraft propulsion system including a plurality of aft-mounted electric motors, in accordance with one or more embodiments of the present disclosure.
FIG. 8 illustrates a perspective view of a portion of a drivetrain of the aircraft propulsion system including a forward-mounted electric motor and an aft-mounted electric motor, in accordance with one or more embodiments of the present disclosure.

### DETAILED DESCRIPTION

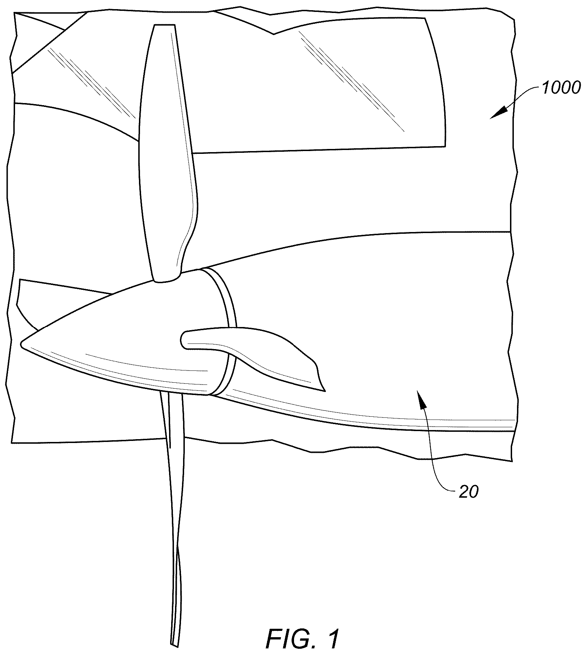

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

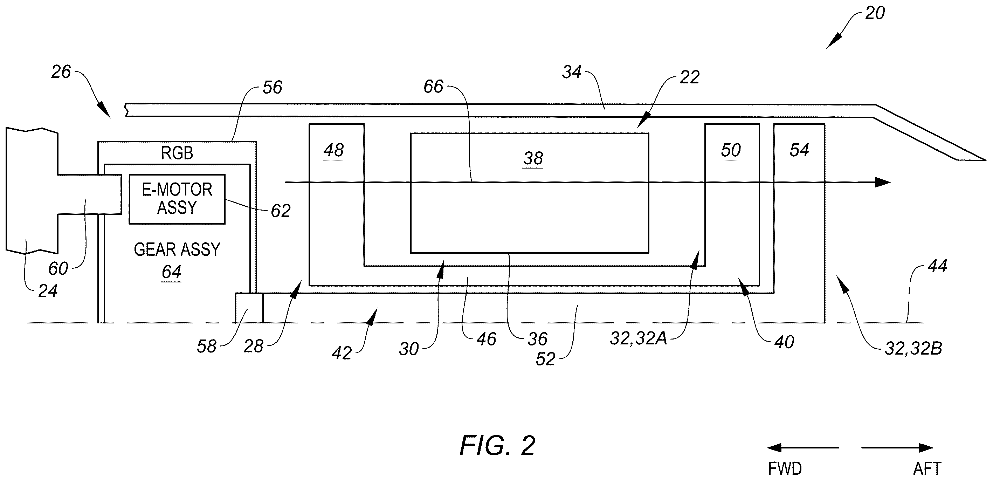

FIG. 2 schematically illustrates a cutaway, side view of the propulsion system 20. The propulsion system 20 of FIG. 2 includes an engine 22, a propulsor 24, and a drivetrain 26. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, or other intermittent combustion engines.

The engine 22 of FIG. 2 includes a compressor section 28, a combustor section 30, a turbine section 32, and an engine static structure 34. The combustor section 30 includes a combustor 36 (e.g., an annular combustor) forming a combustion chamber 38. The turbine section 32 includes a high-pressure turbine 32A and a power turbine 32B.

Components of the compressor section 28 and/or the turbine section 32 of FIG. 2 form a first rotational assembly 40 (e.g., a high-pressure spool) and a second rotational assembly 42 of the engine 22. The first rotational assembly 40 and the second rotational assembly 42 are mounted for rotation about a rotational axis 44 (e.g., an axial centerline) of the engine 22 relative to the engine static structure 34.

The first rotational assembly 40 includes a first shaft 46, a bladed compressor rotor 48 for the compressor section 28, and a bladed first turbine rotor 50 for the high-pressure turbine 32A. The first shaft 46 interconnects the bladed compressor rotor 48 and the bladed first turbine rotor 50.

The second rotational assembly 42 of FIG. 2 includes a second shaft 52 (e.g., an engine output shaft) and a bladed second turbine rotor 54 for the power turbine 32B. The second shaft 52 is connected to the bladed second turbine rotor 54. The second shaft 52 is coupled with the propulsor 24 by the drivetrain 26.

The drivetrain 26 includes a gear box 56 (e.g., a reduction gear box (RGB)), an input shaft 58, an output shaft 60 (e.g., a propeller shaft), and an electric motor assembly 62. The gear box 56 includes and houses a gear assembly 64. The gear assembly 64 couples the input shaft 58 with the output shaft 60. For example, the gear assembly 64 may be a reduction gear assembly configured to drive rotation of the output shaft 60 at a reduced rotational speed relative to the input shaft 58. The input shaft 58 is coupled with (e.g., mounted on) the second shaft 52. The input shaft 58 interconnects the second shaft 52 with the gear assembly 64. The output shaft 60 is coupled with (e.g., mounted on) the propulsor 24. The output shaft 60 interconnects the propulsor 24 with the gear assembly 64. As will be discussed in further detail, the electric motor assembly 62 includes one or more electric motors coupled with the gear assembly 64.

The engine static structure 34 includes engine casings, cowlings, and other fixed (e.g., non-rotating) structures of the engine 22 which form, house, and/or support components of the engine 22 such as, but not limited to, those of the compressor section 28, the combustor section 30, and the turbine section 32. The engine static structure 34 may include one or more bearing assemblies configured to rotationally support components of the first rotational assembly 40 and the second rotational assembly 42.

During operation of the propulsion system 20 of FIG. 2, ambient air enters the propulsion system 20 (e.g., through an air intake) and is directed through the engine 22 along a core gas flow path 66. The ambient air flow along the core gas flow path 66 is compressed in the compressor section 28 by rotation of the bladed compressor rotor 48, and directed into the combustor 36 (e.g., the combustion chamber 38). Fuel is injected into the combustion chamber 38 and mixed with the compressed air to provide a fuel-air mixture. This fuel-air mixture is ignited, and combustion products thereof flow through the high-pressure turbine 32A and the power turbine 32B and are exhausted from the propulsion system 20. The bladed first turbine rotor 50 and the bladed second turbine rotor 54 rotationally drive the first rotational assembly 40 and the second rotational assembly 42, respectively, in response to the combustion gas flow through the high-pressure turbine 32A and the power turbine 32B along the core gas flow path 66. The second rotational assembly 42 (e.g., the second shaft 52) drives rotation of the propulsor 24 through the drivetrain 26. The electric motor(s) of the electric motor assembly 62 may be selectively operated to drive rotation of the propulsor 24 through the gear assembly 64 in combination with the second shaft 52. Additionally, the electric motor(s) of the electric motor assembly 62 may be driven by the drivetrain 26 to generate electrical power for one or more electrical systems of the propulsion system 20 and/or the aircraft 1000 (see FIG. 1).

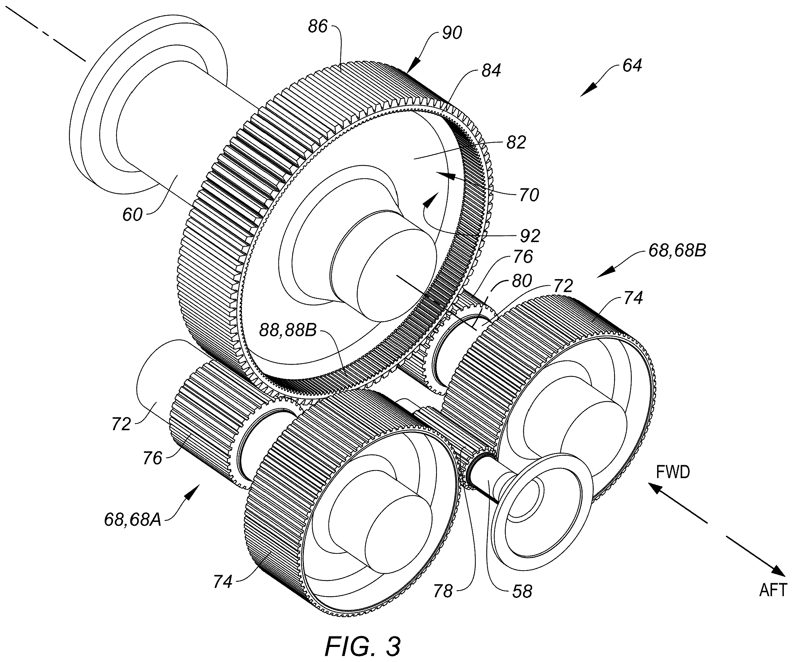

FIG. 3 illustrates a perspective view of a portion of the drivetrain 26 showing the input shaft 58, the output shaft 60, and the gear assembly 64. The gear assembly 64 includes at least one reduction gear-shaft assembly 68 and an output gear 70 (e.g., a propeller shaft drive gear) 72. The at least one reduction gear-shaft assembly 68 of FIG. 3 includes a first reduction gear-shaft assembly 68A and a second reduction gear-shaft assembly 68B. The reduction gear-shaft assemblies 68 each include a shaft 72, a first reduction gear 74, and a second reduction gear 76. The first reduction gear 74 and the second reduction gear 76 are mounted on the shaft 72. The first reduction gear 74 is engaged with (e.g., meshed with) an input gear 78 of the input shaft 58. The first reduction gear 74 may have a diameter which is greater than a diameter of the second reduction gear. The output gear 70 is mounted on or otherwise fixed to the output shaft 60. The output shaft 60 and the output gear 70 (e.g., and the propulsor 24) are rotatable together about a rotational axis 80. The rotational axis 80 is radially offset from the rotational axis 44; however, the present disclosure is not limited to this foregoing exemplary configuration of the drivetrain 26. The output gear 70 includes a base wall 82 and a gear ring 84. The base wall 82 extends radially between the output shaft 60 and the gear ring 84. The gear ring 84 circumscribes the output gear 70 on the base wall 82 at (e.g., on, adjacent, or proximate) an outer diameter of the output gear 70. The gear ring 84 includes an outer gear face 86 and an inner gear face 88. The outer gear face 86 extends circumferentially about the rotational axis 80 on an outer radial side 90 of the gear ring 84. The outer gear face 86 is engaged with (e.g., meshed with) the second reduction gear 76 of each of the reduction gear-shaft assemblies 68. The inner gear face 88 extends circumferentially about the rotational axis 80 on an inner radial side 92 of the gear ring 84. The inner gear face 88 may be disposed on the inner radial side 92 on one or both axial sides of the base wall 82. For example, the inner gear face 88 may include a first axial portion 88A (e.g., a forward portion) and/or a second axial portion 88B (e.g., an aft portion). The first axial portion 88A may be disposed on the inner radial side 92 forward of the base wall 82, for example, axially between the base wall 82 and the propulsor 24. The second axial portion 82B may be disposed on the inner radial side 92 aftward of the base wall 82, for example, axially between the base wall 82 and the engine 22.

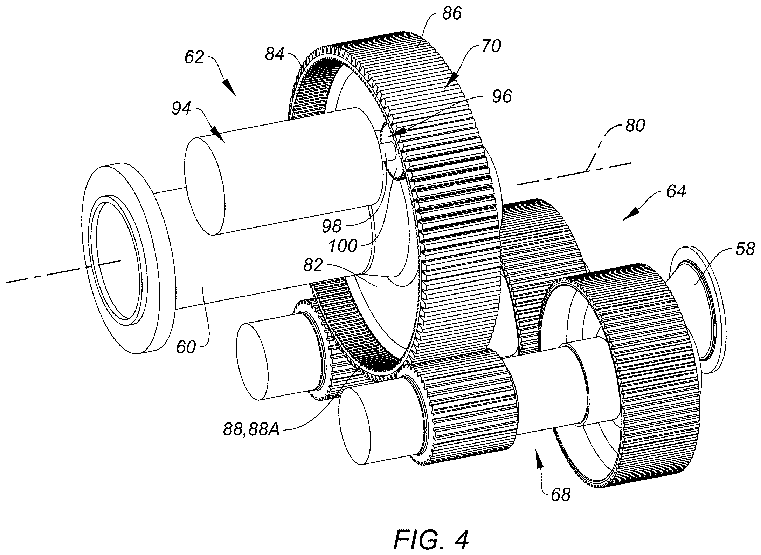

Referring to FIGS. 4-8, the electric motor assembly 62 includes at least one electric motor 94 coupled with the output gear 70. The electric motor(s) 94 may be mounted on and/or to the gear box 56. All or a portion of the electric motor(s) 94 may be disposed within the gear box 56. Each of the electric motors 94 includes a rotor 96 including an output shaft 98 and an output gear 100. The output gear 100 is mounted on or otherwise fixed to the output shaft 98. The output gear 100 is engaged with (e.g., meshed with) the inner gear face 88.

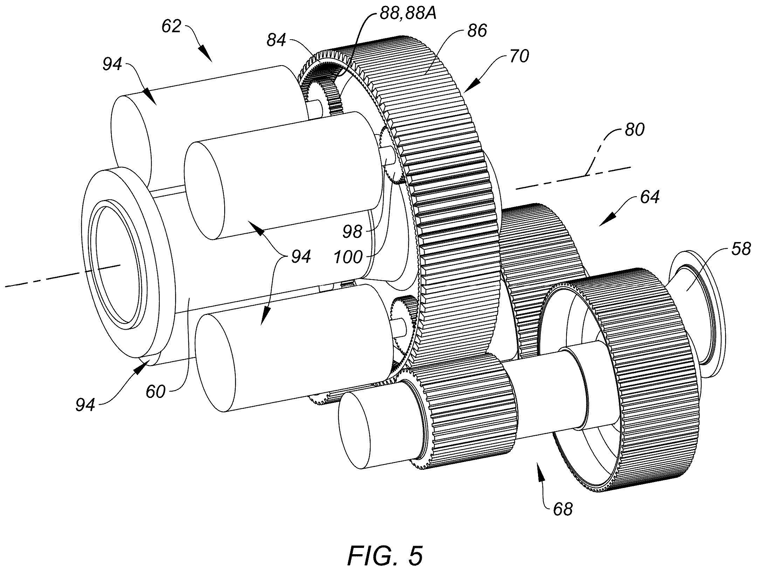

The electric motor(s) 94 may be arranged as forward-mounted electric motors. For example, the electric motor(s) 94 may be mounted in the gear box 56 forward of the output gear 70. As shown in FIGS. 4 and 5, the output gear 100 is engaged with (e.g., meshed with) the first axial portion 88A of the inner gear face 88. The electric motor assembly 62 may include a single electric motor 94 engaged with the inner gear face 88 as shown, for example, in FIG. 4. Alternatively, the electric motor assembly 62 may include a plurality of electric motors 94 engaged with the inner gear face 88 as shown, for example, in FIG. 5. The plurality of electric motors 94 may be circumferentially distributed (e.g., equally circumferentially spaced) about the output shaft 60, the output gear 70, and the rotational axis 80. Embodiments of the electric motor assembly 62 including a plurality of electric motors 94 engaged with the output gear 70 may facilitate selection of smaller electric motors (e.g., compared to a single, larger electric motor) which may, in turn, facilitate improved packaging of the drivetrain 26 components. For example, the plurality of electric motors 94 may be disposed entirely within a radial span of the output gear 70 and an axial span of the output shaft 60.

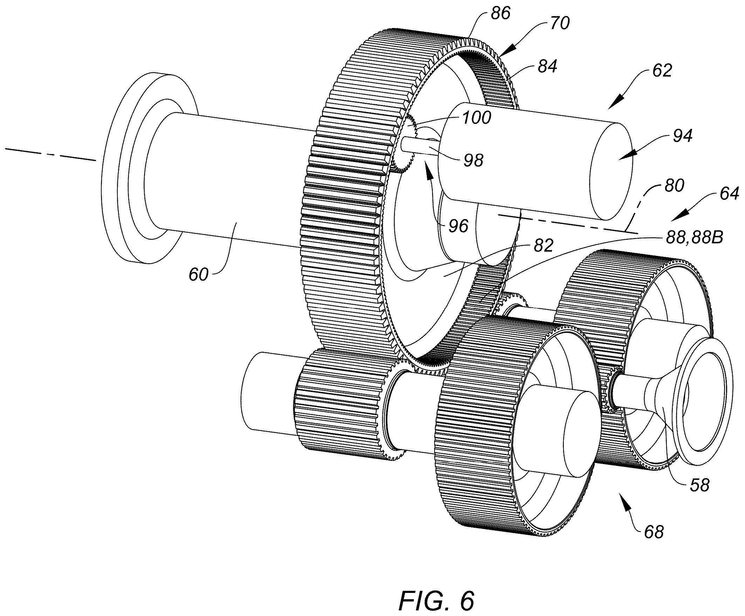

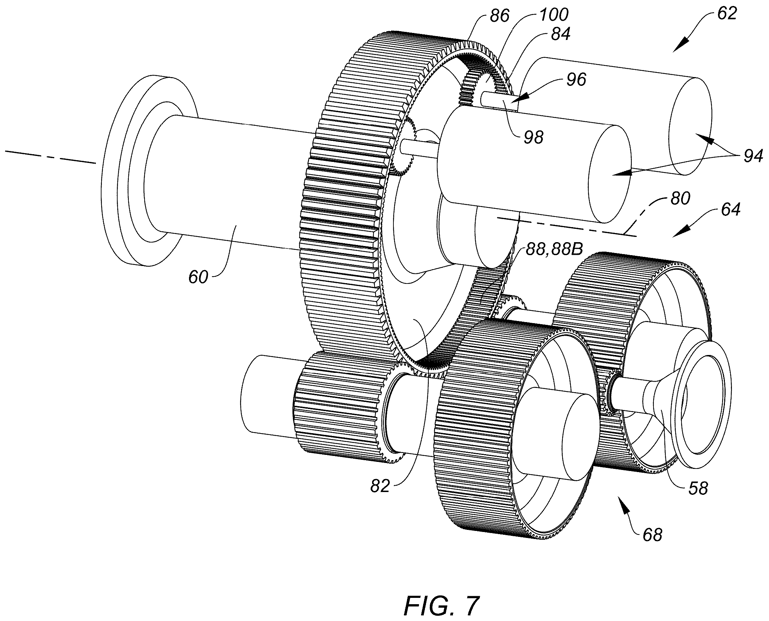

The electric motor(s) 94 may be arranged as aft-mounted electric motors. For example, the electric motor(s) 94 may be mounted in the gear box 56 aft of the output gear 70. As shown in FIGS. 6 and 7, the output gear 100 is engaged with (e.g., meshed with) the second axial portion 88B of the inner gear face 88. The electric motor assembly 62 may include a single electric motor 94 engaged with the inner gear face 88 as shown, for example, in FIG. 6. Alternatively, the electric motor assembly 62 may include a plurality of electric motors 94 engaged with the inner gear face 88 as shown, for example, in FIG. 7.

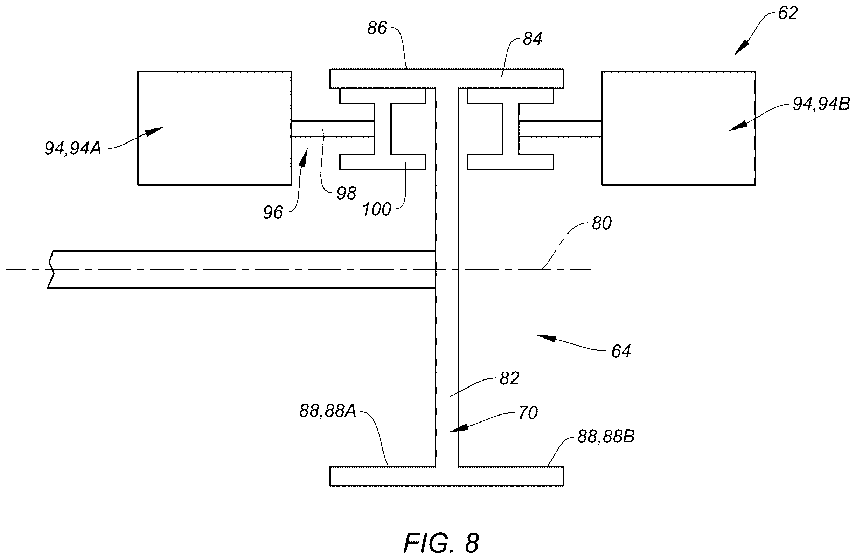

Referring to FIG. 8, the electric motor assembly 62 may include forward and aft arrangements of the electric motors 94. For example, the electric motor assembly 62 of FIG. 8 includes a forward first electric motor 94A and an aft second electric motor 94B. The output gear 100 of the forward first electric motor 94A is engaged with (e.g., meshed with) the first axial portion 88A. The output gear 100 of the aft second electric motor 94B is engaged with (e.g., meshed with) the second axial portion 88B.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system for an aircraft, the propulsion system comprising:
an engine including an engine output shaft;
a drivetrain coupled with the engine output shaft, wherein the drivetrain includes a propulsor output shaft, a gear assembly, and an electric motor assembly, and the gear assembly includes a propulsor output gear mounted on the propulsor output shaft, the propulsor output gear and the propulsor output shaft are rotatable about a rotational axis, the propulsor output gear includes a ring extending circumferentially about the rotational axis, the ring extends between an outer radial side and an inner radial side, the ring includes an outer gear face and an inner gear face, the outer gear face is disposed on the outer radial side, the inner gear face is disposed on the inner radial side, and the electric motor assembly includes at least one electric motor, the at least one electric motor includes a rotor, the rotor includes an electric motor output shaft and an electric motor output gear is mounted on the electric motor output shaft, the electric motor output gear is engaged with the inner gear face; and
a propulsor interconnected with the propulsor output gear by the propulsor output shaft, the propulsor rotatable about the rotational axis.

2. The propulsion system of claim 1, wherein the drivetrain further includes at least one reduction gear-shaft assembly, the at least one reduction gear-shaft assembly is engaged with the outer gear face, and the at least one reduction gear-shaft assembly is coupled with the engine output shaft.

3. The propulsion system of claim 1 or 2, wherein the propulsor output gear includes a base wall extending radially between the propulsor output shaft and the ring, and the base wall is connected to the ring at the inner gear face.

4. The propulsion system of claim 3, wherein the electric motor output gear is engaged with a first axial portion of the inner gear face between the propulsor and the base wall.

5. The propulsion system of claim 4, wherein the at least one electric motor includes a plurality of electric motors, and the electric motor output gear of each of the plurality of electric motors is engaged with the first axial portion.

6. The propulsion system of claim 3, wherein the electric motor output gear is engaged with a second axial portion of the inner gear face opposite the base wall from the propulsor.

7. The propulsion system of claim 6, wherein the at least one electric motor includes a plurality of electric motors, and the electric motor output gear of each of the plurality of electric motors is engaged with the second axial portion.

8. The propulsion system of claim 3, wherein the inner gear face includes a first axial portion and a second axial portion, the first axial portion is disposed on a first axial side of the base wall, the second axial portion is disposed on a second axial side of the base wall opposite the first axial side, the at least one electric motor includes a first electric motor and a second electric motor, the electric motor output gear of the first electric motor is engaged with the first axial portion, and the electric motor output gear of the second electric motor is engaged with the second axial portion.

9. A propulsion system for an aircraft, the propulsion system comprising:
an engine including an engine output shaft;
a drivetrain coupled with the engine output shaft, wherein the drivetrain includes a propulsor output shaft, a gear assembly, and an electric motor assembly, and the gear assembly includes a propulsor output gear, a first reduction gear-shaft assembly, and a second reduction gear-shaft assembly, the propulsor output gear is mounted on the propulsor output shaft, the propulsor output gear includes a ring circumscribing the propulsor output gear, the ring includes an outer gear face and an inner gear face, the first reduction gear-shaft assembly and the second reduction gear-shaft assembly are engaged with the outer gear face, the first reduction gear-shaft assembly and the second reduction gear-shaft assembly are coupled with the engine output shaft, and the electric motor assembly includes at least one electric motor, the at least one electric motor includes a rotor, the rotor includes an electric motor output shaft and an electric motor output gear is mounted on the electric motor output shaft, the electric motor output gear is engaged with the inner gear face; and
a propulsor interconnected with the propulsor output gear by the propulsor output shaft, optionally wherein the engine output shaft has a first rotational axis, the propulsor output shaft has a second rotational axis, and the first rotational axis is offset from the second rotational axis.

10. The propulsion system of claim 9, wherein each of the first reduction gear-shaft assembly and the second reduction gear-shaft assembly includes a reduction shaft, a first reduction gear, and a second reduction gear, the first reduction gear and the second reduction gear are mounted on the reduction shaft, the first reduction gear is coupled with the engine output shaft, and the second reduction gear is engaged with the outer gear face.

11. The propulsion system of any preceding claim, wherein the at least one electric motor includes a plurality of electric motors, and the electric motor output gear of each of the plurality of electric motors is engaged with the inner gear face.

12. The propulsion system of claim 11, wherein each of the plurality of electric motors is disposed within a radial span of the propulsor output gear.

13. The propulsion system of claim 11 or 12, wherein each of the plurality of electric motors is disposed within an axial span of the propulsor output shaft.

14. The propulsion system of any of claims 11 to 13, wherein the plurality of electric motors are circumferentially distributed about the rotational axis.

15. The propulsion system of any of claims 11 to 14, when not dependent on any of claims 1 to 8, wherein the propulsor output gear is rotatable about a rotational axis, the plurality of electric motors includes a forward-mounted electric motor and an aft-mounted electric motor, the forward-mounted electric motor is disposed axially between the propulsor output gear and the propulsor, and the aft-mounted electric motor is disposed opposite the propulsor output gear from the propulsor.
